# EUROPÄISCHE PATENTANMELDUNG

(11) **EP 1 553 311 A2**
(43) Veröffentlichungstag der Anmeldung: **13.07.2005**
(21) Anmeldenummer: 05000298.9
(22) Anmeldetag: 08.01.2005
(51) Int. Cl.: F16B 11/00, F16B 17/00

(54) **Verfahren zur Erstellung einer Steckverbindung mittels Klebstoffinjektion, sowie ein Einsteckelement und ein hohles Fügeteil hierfür**

(30) Priorität: 09.01.2004 DE 102004001386
(71) Anmelder: Universität Kassel, 34125 Kassel (DE)
(72) Erfinder: Siebert, Marc, 34128 Kassel (DE)
(74) Vertreter: WALTHER, WALTHER & HINZ Patentanwälte

(57) **Zusammenfassung**

Gegenstand der Erfindung ist ein Verfahren zur Erstellung einer Steckverbindung mittels Klebstoffinjektion, bei dem ein Einsteckelement (10) in ein hohles Fügeteil (12) eingefügt wird, so dass zwischen Fügeteil (12) und Einsteckelement (10) eine Klebefuge (22) ausgebildet wird, die durch eine an einer Innenwandung des Fügeteils (12) und an einer Außenwandung des Einsteckelementes (10) definierte Klebefläche (32, 34) begrenzt ist, wobei im Fügeteil (12) oder im Einsteckelement (10) ein Injektionskanal (18) ausgebildet ist, wobei im Fügeteil (12) oder im Einsteckelement (10) ein Entlüftungskanal (16) ausgebildet ist, und wobei die Klebefuge (22) zumindest einseitig durch Dichtmittel (26, 30, 36) begrenzt ist. Ein Verfahren zur Erstellung einer Steckverbindung mittels Klebstoffinjektion zu schaffen, bei denen die Klebeverbindung effektiv und kostengünstig herstellbar ist und bei denen die Klebeverbindung langsamer altert, wird dadurch erreicht, dass der Entlüftungskanal (16) innenseitig außerhalb der Klebefläche (32, 34) neben die Klebefuge (22) mündet, mit den folgenden Schritten:
a) teilweises einführen des Einsteckelementes (10) in das Fügeteil (12), so dass der Entlüftungskanal (16) gegenüber der Klebefläche (32, 34) mündet,
b) injizieren des Klebstoffes (44) so lange, bis Klebstoff (44) aus dem Entlüftungskanal (16) heraustritt,
c) vollständiges Einschieben des Einsteckelementes (10) bis der Entlüftungskanal (16) das Dichtmittel (30, 36) passiert hat und außerhalb der Klebefläche (32, 34) mündet.

## Beschreibung

Die vorliegende Erfindung betrifft ein Verfahren zur Erstellung einer Steckverbindung mittels Klebstoffinjektion gemäß dem Oberbegriff des Anspruches 1, sowie ein Einsteckelement und ein hohles Fügeteil hierfür gemäß Anspruch 3.

Aus der DE 195 20 065 C 2, der DE 17 11 030 U, der DE 25 09 357 A1 und der DE 37 40 908 C 2 ist ein Verfahren zur Herstellung einer Klebeverbindung mittels Klebstoffinjektion bekannt, bei dem in einem zwischen einem Fügeteil und einem Einsteckelement vorbereiteten Spalt Klebstoff injiziert wird, wobei der Klebstoff unter einem hohen hydrostatischen Druck injiziert wird und unter Einhaltung dieses Druckes aushärtet. Dabei wird der Klebstoff durch einen Injektionskanal in die Klebefuge eingebracht, während die in der Klebefuge befindliche Luft durch einen Entlüftungskanal entweichen kann. Um den zur Aushärtung erforderlichen Druck aufzubauen, ist es notwendig, sowohl den Injektions- als auch den Entlüftungskanal entsprechend druckfest zu gestalten. Dies ist mit einem nicht unerheblichen Aufwand verbunden.

Obwohl der Injektions- und der Entlüftungskanal mit Klebstoff gefüllt bleibt, kommt es in der Praxis vor, dass der Klebstoff aufgrund des Kontaktes mit Luft oder anderen Gasen oder Medien altert und nach einer gewissen Zeit seine Klebewirkung nachlässt.

Davon ausgehend liegt der vorliegenden Erfindung die Aufgabe zu Grunde, ein Verfahren, ein Einsteckelement und ein Fügeteil der eingangs genannten Art zu schaffen, bei denen die Klebeverbindung effektiv und kostengünstig herstellbar ist und bei denen die Klebeverbindung langsamer altert.

Als technische Lösung dieser Aufgabe wird erfindungsgemäß ein Verfahren mit den Merkmalen des Anspruches 1 und ein Einsteckelement sowie ein Fügeteil mit den Merkmalen des Anspruchs 3 vorgeschlagen. Vorteilhafte Weiterbildungen dieses Verfahrens, des Einsteckelementes und des Fügeteiles sind den jeweiligen Unteransprüchen zu entnehmen.

Ein nach dieser technischen Lehre ausgebildetes Verfahren und ein nach dieser technischen Lehre ausgebildetes Einsteckelement sowie Fügeteil haben den Vorteil, dass durch die Anordnung des Entlüftungskanals außerhalb der Klebefläche der Kontakt von der eigentlichen Klebefuge zur Umwelt unterbrochen ist, so dass sich Umwelteinflüsse nicht negativ auf den Klebstoff auswirken können, insbesondere dass hierdurch die Alterung des Klebstoffs nicht vorangetrieben wird.

Ein weiterer Vorteil besteht darin, dass durch das Injizieren des Klebstoffs in klassischer Weise eine Entlüftung der Klebefuge erfolgt und dass nach dem Verschieben der Fügeteile relativ zueinander und dem Verschließen des Entlüftungskanales anschließend der für die eigentliche Klebstoffinjektion erforderliche hohe Druck in einfacher Weise aufgebaut werden kann, da die einzige Verbindung von der Klebefuge zur Umwelt über den Injektionskanal erfolgt, der beim Injizieren naturgemäß ohnehin mit einem hohen Druck beaufschlagt wird. Somit entfällt eine entsprechende Druckabsicherung des Entlüftungskanals, was die Erstellung einer solchen Klebeverbindung deutlich vereinfacht und verbilligt.

Ein noch anderer Vorteil besteht darin, dass der Entlüftungskanal nun nicht zwingend im Bereich der Klebefuge angesiedelt werden braucht, sondern an einer anderen Stelle außerhalb der Klebefuge vorgesehen werden kann. Hierdurch ist es möglich, den Entlüftungskanal an einer unauffälligen und am fertigen Endprodukt nicht sichtbaren Stelle zu platzieren. Dies ist insbesondere bei der Fertigung von Geländern oder dergleichen wichtig, da hier nur ein Kanal unauffällig an der Unterseite des Geländers platziert werden kann. Der andere Kanal müsste dann im Sichtbereich angeordnet werden, was den ästhetischen Gesamteindruck des Geländers beeinträchtigen würde. Erfindungsgemäß ist es nun möglich, den Entlüftungskanal beispielsweise in der Schnittstelle zwischen dem Einsteckelement und dem Fügeteil verschwinden zu lassen.

In einer bevorzugten Ausführungsform wird die Klebefuge mittels O-Ringen seitlich abgedichtet. Das hat den Vorteil, dass auch beim Verschieben des Fügeteils relativ zum Einsteckelement durch die O-Ringe eine zuverlässige Abdichtung erfolgt mit der Folge, dass der zu diesem Zeitpunkt bereits in der Klebefuge befindliche Klebstoff nicht unerwünscht austreten kann. Ein weiterer Vorteil der O-Ring-Abdichtung besteht darin, dass hierdurch auch die Klebefuge zuverlässig abgedichtet wird, so dass Umwelteinflüsse nicht an den Klebstoff herantreten können.

Weitere Vorteile des erfindungsgemäßen Verfahrens und des erfindungsgemäßen Einsteckelementes und des erfindungsgemäßen Fügeteiles ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine geschnittene Seitenansicht eines Teiles eines erfindungsgemäßen Einsteckelementes und eines Teiles eines erfindungsgemäßen Fügeteiles unmittelbar vor dem Zusammenstecken;
- Fig. 2: das Einsteckelement und das Fügeteil gemäß Fig. 1 in einer vorläufig zusammengesteckten Position;
- Fig. 3: das Einsteckelement und das Fügeteil gemäß Fig. 1 mit injiziertem Klebstoff;
- Fig. 4: das Einsteckelement und das Fügeteil gemäß Fig. 1 mit injiziertem Klebstoff und bereit zum Zusammenschieben;
- Fig. 5: das Einsteckelement und das Fügeteil gemäß Fig. 1 in zusammengeschobener Position und bereit zum Nachinjizieren;
- Fig. 6: das Einsteckelement und das Fügeteil gemäß Fig. 1 in fertig zusammengestecktem und geklebtem Zustand.

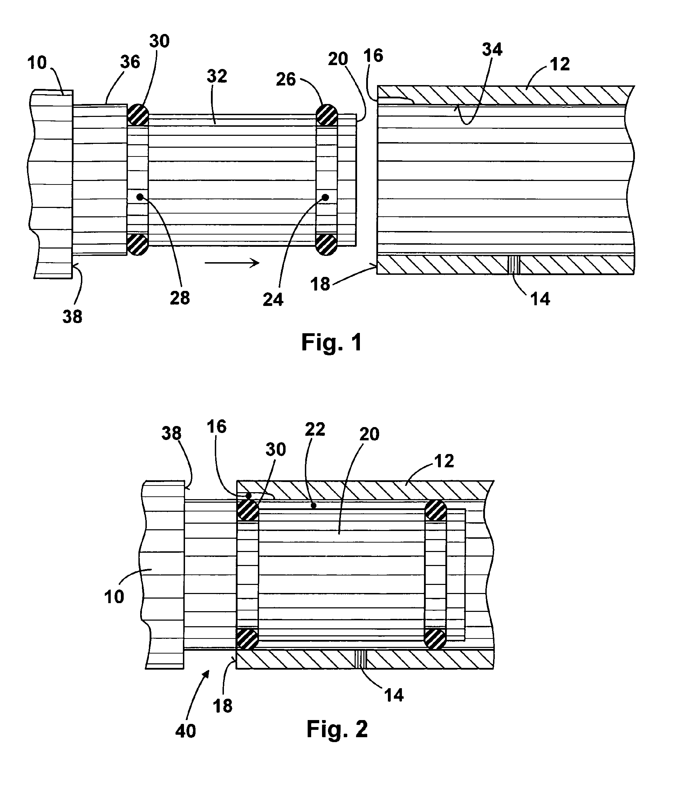

In Fig. 1 ist in einer explosionsartigen Teilansicht ein Einsteckelement 10 mit einem Fügeteil 12 teilweise geschnitten dargestellt. Dieses Fügeteil 12 ist als klassisches Rohr ausgebildet und besitzt einen Injektionskanal 14, der den inneren Hohlraum des Fügeteils 12 mit der Außenseite verbindet. Dabei ist die Innenseite des Fügeteils 12, wie bei einem Rohr üblich, hohlzylindrisch ausgebildet und weist bis auf den Injektionskanal 14 und einen Entlüftungskanal 16 keinerlei Vorsprünge, Aussparungen oder Hinterschneidungen auf. Der Entlüftungskanal 16 reicht von einer Stirnseite 18 des Fügeteils 12 im Wesentlichen koaxial bis ins Innere des Fügeteils 12 hinein und ist ähnlich einer Nut in die Innenwandung des Fügeteils 12 eingelassen.

Das Einsteckelement 10 umfasst einen in das Innere des Fügeteils 12 einsteckbaren Einsteckzylinder 20, dessen Außendurchmesser kleiner als der Innendurchmesser des Fügeteils 12 ausgebildet ist, so dass sich zwischen dem Einsteckzylinder 20 und dem Fügeteil 12 eine Klebefuge 22 ausbildet. Des Weiteren ist am freien Ende des Einsteckzylinders eine Nut 24 ausgebildet, in der ein erster O-Ring 26 eingelassen ist. Am gegenüberliegenden Ende des Einsteckzylinders 20 ist eine zweite Nut 28 ausgebildet, in der ein zweiter O-Ring 30 eingelassen ist. Die beiden O-Ringe 26, 30 begrenzen die Klebefuge 22, so dass sich in dem Bereich zwischen den O-Ringen 26, 30 auf der Oberfläche des Einsteckzylinders 20 genauso wie auf der Innenseite des Fügeteils 12 je eine Klebefläche 32, 34 ausbildet.

An den Einsteckzylinder 20 schließt sich eine zylindrische Dichtfläche 36 an, deren Außendurchmesser im Wesentlichen identisch mit dem Innendurchmesser des Fügeteils 12 ist. Somit kann diese Dichtfläche 36 ins Innere des Fügeteils 12 eingeschoben werden, und unterstützt die Abdichtung der Klebefuge 22.

In einer anderen, hier nicht dargestellten Ausführungsform wird an dieser Stelle auf den O-Ring verzichtet und als einziges Dichtmittel die Dichtfläche 36 verwendet.

An die Dichtfläche 36 schließt sich eine radial ausgerichtete Anschlagfläche 38 an, an welcher die Stirnseite 18 des Fügeteils 12 zur Anlage kommt.

Der Entlüftungskanal 16 ist so dimensioniert, dass er bei teilweise eingeschobenem Einsteckelement 10 bis über den O-Ring 30 hinaus reicht und in diesem Falle gegenüber der Klebefläche 32 mündet, während der Entlüftungskanal 16 im endgültig verschlossenen Zustand jenseits des O-Rings 30 außerhalb der Klebefläche 32 und außerhalb der Klebefuge 22 mündet, so dass im fertig montierten Zustand kein Kontakt zwischen Klebefuge 22 und Entlüftungskanal 16 vorherrscht. Somit besitzt die Klebefuge 22 im fertig montierten Zustand lediglich den Injektionskanal 14 als Kontakt zur Außenwelt, so dass hierdurch ein einfacher Druckaufbau möglich ist und so dass hierdurch der Kontakt des Klebstoffes mit der Umwelt auf ein Minimum reduziert wird. Gleichzeitig braucht am fertigen Objekt lediglich ein einziges Loch gebohrt zu werden, so dass die Ästhetik des fertigen Objektes nur minimal gestört wird.

Dabei hat es sich als sehr vorteilhaft erwiesen, diese Technik zum Bau von Geländern einzusetzen, da die hier genannten Vorteile bei Geländern besonders signifikant sind. Es ist aber auch denkbar, das Einsteckelement 10 und das Fügeteil 12 als Welle-Nabe-Verbindung auszubilden.

Anhand der Fig. 2 bis 6 wird das Verfahren zur Erstellung einer Steckverbindung mittels Klebstoffinjektion detailliert beschrieben:

Zunächst einmal wird das Einsteckelement 10 mit seinem Einsteckzylinder 20 ins Innere des Fügeteils 12 eingefügt. Dabei wird der Einsteckzylinder 20 so weit in das Fügeteil 12 eingefügt, dass zwischen der Stirnseite 18 des Fügeteils 12 und der Anschlagfläche 38 des Einsteckelementes 10 ein genau definierter Spalt 40 verbleibt. Dieser Spalt 40 ist in Verbindung mit dem Entlüftungskanal 16 so dimensioniert, dass der Entlüftungskanal 16 in diesem Zustand vorbei am O-Ring 30 bis in die Klebefuge 22 reicht, d. h. der Entlüftungskanal 16 endet so weit gegenüber der Klebefläche 32, dass hierdurch ein guter Abfluss des flüssigen Klebstoffes möglich ist.

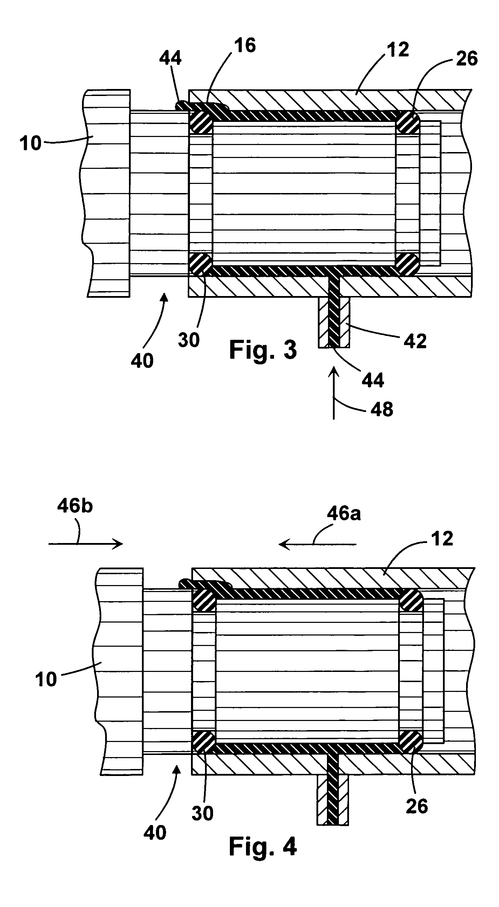

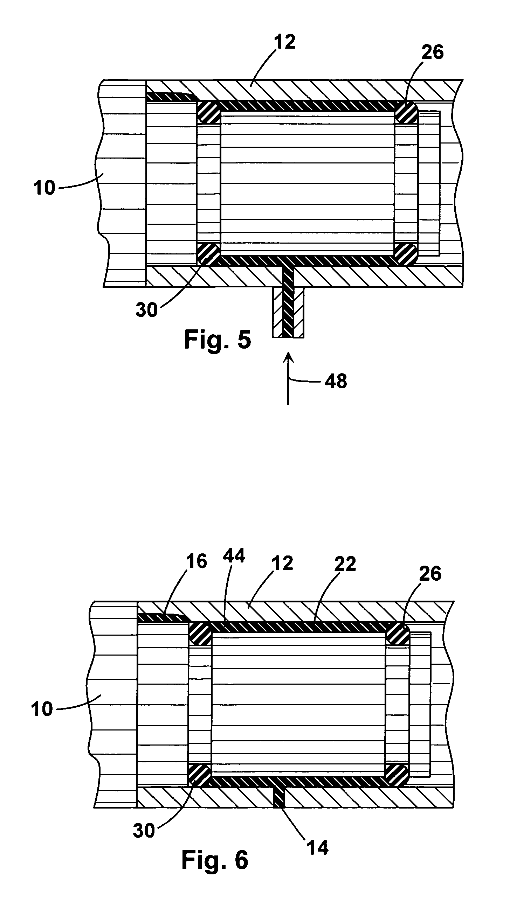

In dieser Position werden das Fügeteil 12 und das Einsteckelement 10 fixiert, bevor bei einer hier nicht näher dargestellten Klebstoffinjektionsvorrichtung 42 so viel Klebstoff 44 in die Klebefuge 22 eingebracht wird, dass diese vollständig mit Klebstoff 44 ausgefüllt ist und dass darüber hinaus ein Teil des Klebstoffes durch den Entlüftungskanal 16 aus dem Fügeteil 12 heraustritt. Anschließend wird das Einsteckelement 10 und das Fügeteil 12 in Richtung der Pfeile 46a und 46b verschoben, so dass sich der Spalt 40 vollständig verschließt, wie in den Fig. 4 und 5 dargestellt ist. Anschließend wird, wie von Pfeil 48 angedeutet, weiterer Klebstoff 44 nachinjiziert, wobei dieses Nachinjizieren unter Solldruck erfolgt.

Die fertige Steckverbindung ist dann in Fig. 6 dargestellt. Hieraus wird ersichtlich, dass der Entlüftungskanal außerhalb der Klebefuge 22 liegt und der Klebstoff somit an dieser Stelle keinen Kontakt zur Außenwelt hat. Gleichzeitig wird die Klebefuge 22 durch die O-Ringe 26 und 30 abgedichtet, so dass der einzige Kontakt der Klebefuge 22 zur Außenwelt über den Injektionskanal 14 stattfinden kann. Dabei ist es möglich, diesen Injektionskanal 14 an einer versteckten Stelle anzuordnen, so dass dieser die Ästhetik des Gesamt-Bauteils nicht beeinträchtigt.

### Bezugszeichenliste:

- 10: Einsteckelement
- 12: Fügeteil
- 14: Injektionskanal
- 16: Entlüftungskanal
- 18: Stirnseite
- 20: Einsteckzylinder
- 22: Klebefuge
- 24: Nut
- 26: O-Ring
- 28: Nut
- 30: O-Ring
- 32: Klebefläche
- 34: Klebefläche
- 36: Dichtfläche
- 38: Anschlagfläche
- 40: Spalt
- 42: Klebstoff-Injektionsvorrichtung
- 44: Klebstoff
- 46a, b: Pfeil
- 48: Pfeil

## Patentansprüche

1. Verfahren zur Erstellung einer Steckverbindung mittels Klebstoffinjektion, bei dem ein Einsteckelement (10) in ein hohles Fügeteil (12) eingefügt wird, so dass zwischen Fügeteil (12) und Einsteckelement (10) eine Klebefuge (22) ausgebildet wird, die durch eine an einer Innenwandung des Fügeteils (12) und an einer Außenwandung des Einsteckelementes (10) definierte Klebefläche (32, 34) begrenzt ist, wobei im Fügeteil (12) oder im Einsteckelement (10) ein Injektionskanal (14) ausgebildet ist, wobei im Fügeteil (12) oder im Einsteckelement (10) ein Entlüftungskanal (16) ausgebildet ist, und wobei die Klebefuge (22) zumindest einseitig durch Dichtmittel begrenzt ist,
**dadurch gekennzeichnet,**
**dass** der Entlüftungskanal (16) außerhalb der Klebefläche (32, 34) angeordnet ist und während des Klebevorganges in und nach Fertigstellung des Klebevorganges neben die Klebefuge (22) mündet mit den folgenden Schritten:
a) teilweises Einführen des Einsteckelementes (10) in das Fügeteil (12), so dass der Entlüftungskanal (16) gegenüber der Klebefläche (32, 34) mündet,
b) Injizieren des Klebstoffes (44) so lange, bis Klebstoff (44) aus dem Entlüftungskanal (16) heraustritt,
c) vollständiges Einschieben des Einsteckelementes (10) bis der Entlüftungskanal (16) das Dichtmittel (30, 36) passiert hat und außerhalb der Klebefläche (32, 34) mündet.

2. Verfahren nach Anspruch 1, weiterhin
**gekennzeichnet durch** folgenden Schritt:
d.) Nachinjizieren von Klebstoff (44) bis auf Solldruck.

3. Fügeteil oder Einsteckelement zur Erstellung einer Steckverbindung mittels Klebstoffinjektion, insbesondere nach einem Verfahren gemäß einem der vorangehenden Ansprüche, wobei zwischen dem hohlen Fügeteil (12) und dem Einsteckelement (10) eine Klebefuge (32, 34) ausgebildet ist, die durch eine an einer Innenwandung des Fügeteil (12) oder an einer Außenwandung des Einsteckelementes (10) definierte Klebefläche (32, 34) begrenzt ist, wobei im Fügeteil (12) oder im Einsteckelement (10) ein Injektionskanal (18) ausgebildet ist, wobei im Fügeteil (12) oder im Einsteckelement (10) ein Entlüftungskanal (16) ausgebildet ist und wobei die Klebefuge (22) zumindest einseitig durch Dichtmittel begrenzt ist,
**dadurch gekennzeichnet,**
**dass** der Entlüftungskanal (16) außerhalb der Klebefläche (32, 34) angeordnet ist und während des Klebevorganges in und nach Fertigstellung des Klebevorganges neben die Klebefuge (22) mündet.

4. Fügeteil oder Einsteckelement nach Anspruch 3,
**dadurch gekennzeichnet,**
**dass** das Dichtmittel als O-Ring (26, 30) ausgebildet ist.

5. Fügeteil oder Einsteckelement nach Anspruch 4,
**dadurch gekennzeichnet,**
**dass** der O-Ring (26, 30) in einer Nut (24, 28) gehalten ist.

6. Fügeteil oder Einsteckelement nach einem der Ansprüche 3 bis 5,
**dadurch gekennzeichnet,**
**dass** die Klebefuge (22) beidseitig mittels O-Ring (26, 30) abgedichtet ist.

7. Fügeteil oder Einsteckelement nach einem der Ansprüche 3 bis 6,
**dadurch gekennzeichnet,**
**dass** der Entlüftungskanal (16) gegenüber dem Injektionskanal (18) angeordnet ist.

8. Fügeteil oder Einsteckelement nach einem der Ansprüche 3 bis 7,
**dadurch gekennzeichnet,**
**dass** der Entlüftungskanal (16) von einer Stirnseite (18) des Fügeteils (12) im Wesentlichen koaxial bis ins Innere des Fügeteils (12) hineinreicht.

9. Fügeteil oder Einsteckelement nach Anspruche 8,
**dadurch gekennzeichnet,**
**dass** der Entlüftungskanal (16) ähnlich einer Nut in die Innenwandung des Fügeteils (12) eingelassen ist.
